# EUROPEAN PATENT SPECIFICATION

(11) **EP 3 135 122 B1**
(45) Date of publication and mention of the grant of the patent: **09.01.2019**
(21) Application number: 14887013.2
(22) Date of filing: 03.11.2014
(51) Int. Cl.: A23B 5/04, A23B 5/005, A23L 3/36, A23P 30/10, A23L 5/10, A23L 15/00

(54) **METHOD FOR PREPARING FROZEN FRIED EGGS**
VERFAHREN ZUR HERSTELLUNG VON GEFRORENEN SPIEGELEIERN
MÉTHODE DE PRÉPARATION D'OUFS FRITS CONGELÉS

(30) Priority: 28.03.2014 ES 201430457
(43) Date of publication of application: 01.03.2017
(73) Proprietor: Innovation Foods 360, S.L., 28010 Madrid (ES)
(72) Inventor: IZUEL SANZ, Francisco Xavier, 28010 MADRID (ES)
(74) Representative: Ungria López, Javier
(86) International application number: PCT/ES2014/070820
(87) International publication number: WO 2015/144945

(56) References cited:
- WO-A2-03/001924
- JP-A- H07 135 944
- US-A- 2 902 396
- US-A- 4 409 249
- US-A1- 2003 118 714
- US-A1- 2003 118 714
- US-A1- 2005 136 172
- US-A1- 2005 136 172
- US-A1- 2007 087 106
- US-B2- 7 939 123
- COTTERILL O J ED - STADELMAN W J ET AL: "FREEZING EGG PRODUCTS", 1 January 1973 (1973-01-01), EGG SCIENCE AND TECHNOLOGY, WESTPORT, AVI PUBL, US, PAGE(S) 143 - 149, XP002071961, * the whole document *
- COIMBRA J S R ET AL: "Density, heat capacity and thermal conductivity of liquid egg products", JOURNAL OF FOOD ENGINEERING, BARKING, ESSEX, GB, vol. 74, no. 2, 1 May 2006 (2006-05-01), pages 186-190, XP027891032, ISSN: 0260-8774 [retrieved on 2006-05-01]
- Frozen Food Europe: "Frozen Pre-cooked Fried Egg for the Industry", Frozen Food Europe, 21 March 2013 (2013-03-21), XP055333271, Retrieved from the Internet: URL:https://web.archive.org/web/2014070419 2858/http://www.frozenfoodeurope.com/artic le/products/frozen-pre-cooked-fried-egg-in dustry [retrieved on 2017-01-09]
- 'Frozen pre-cooked fried egg for the industry.' FROZEN FOOD EUROPE . 21 March 2013, XP055333271 Retrieved from the Internet: <URL:http://www.frozefoodeuope.com/article/ products/frozen-pre-cooked- fried-egg-industry> [retrieved on 2014-04-21]

## Description

### OBJECT OF THE INVENTION

The following invention, as expressed in the title of this description, refers to a method for preparing frozen fried eggs such that, after defrosting the frozen fried egg, a fried egg having the same organoleptic characteristics of a freshly prepared fried egg is obtained, that is, it has the same texture, smell, colour and taste.

Therefore, having frozen fried eggs such that, when defrosted, show identical characteristics to freshly prepared fried eggs, has a series of advantages. Firstly, it is beneficial to health since the method for preparing the egg has killed off any bacteria that could potentially transmit any diseases.

Secondly, having frozen fried eggs available avoids having to cook them, which evidently involves using kitchen utensils that get dirty and a process that normally generates smokes, which also makes things dirty, while the method of defrosting frozen fried eggs, both at the industrial level as well as for household consumption, is done cleanly and simply, allowing the fried eggs to be eaten without getting things dirty.

### FIELD OF APPLICATION

The present description details a method for preparing frozen fried eggs, which is of use in the food industry, and that can be sold both at the industrial level, for example in bars and restaurants, as well as for household consumption.

### BACKGROUND OF THE INVENTION

Traditionally, fried eggs are eaten at the same time they are fried, and the process attempts to obtain a fried egg that keeps the yolk liquid (with the texture of a gel) so that the ends of the egg white are set and even slightly charred, in order to get the so called "crispy edges".

On the other hand, due to the difficulty involved in selling frozen fried eggs at an industrial level, simulated egg products have been commercialised instead. The patent document ES 2 180 741 describes a method for producing single portions of simulated egg and/or simulated egg yolks based on: giving shape to a predetermined amount of egg yolk; freezing the egg yolk at a temperature of -34°C or less during at least 15 minutes in order to produce an egg yolk with a gel-like shape that holds itself together and retains its shape when it is defrosted; combining the egg yolk with a predetermined amount of egg white and cooking the combination of egg yolk and egg white in order to obtain a single portion of simulated egg.

Additionally, said document makes reference to other documents such as US 3,863,018, US 3,941,892 and US 4,409,249, in which the different methods for producing a simulated egg product are described, so that US 3,863,018 uses a solid core or bar of precooked frozen egg yolk suspended on liquid egg white in a long container, US 3,941,892 uses synthetic egg yolk that contains dried egg white, oil, dried milk proteins, gum, colouring, flavouring, emulsions and water, and US 4,409,249 uses an aired dispersion of homogeneous egg white and processed egg yolk, so that the egg white and the egg yolk are prepared separately and combined later.

In addition, said document also makes reference to other documents such as US 5,073,399; US 5,149,561; US 5,151,293 and US 5,227,189 in which a simulated egg is created using separate portions of egg yolk and egg white, with the egg yolk made of a synthetic material comprising an edible liquid, colouring and a heat resistant gel shaper.
Furthermore, the US patent application US 2003/118714 A1 describes a method for obtaining a frozen formulated fried egg that comprises separating the egg white portion from the egg yolk, pre-heating said portions of the egg separately and putting them together before cooking in a convention oven at a range of temperature between 162.78°C to 218.33° C during a period of time between 5.5 to 7.75 minutes. Subsequently, the fried egg obtained in the previous step is frozen and packaging said frozen formulated fried egg.
Finally, another US patent application US 2005/136172 A1 describes a method for obtaining a frozen formulated fried egg, that comprises cooking the egg in a mold coated with food grade non-stick material, resembling flat grill fried egg at a temperature of 75°C and then cooling said fried egg in a spiral freezer and packaging the final product.

### DESCRIPTION OF THE INVENTION

The present description details a method for preparing frozen fried eggs so that, starting with fresh eggs, the method comprises:
- cracking the eggs into corresponding molds impregnated with oil;
- inserting the molds with the eggs into a convection oven at a temperature of between 232 and 252°C for between 130 and 150 seconds in order to fry the eggs;
- inserting the molds with the fried eggs into a blast chiller at a temperature of between -23 and -13°C for between 15 and 25 minutes in order to freeze the fried eggs;
- individually bagging the molds with the frozen fried eggs;
such that, when defrosted, fried eggs having a texture similar to that of freshly prepared fried eggs are obtained, making fried eggs available without having to cook them before they are eaten, a procedure that takes time and makes things dirty, such as the kitchen utensils used, also due to the smoke the cooking procedure usually generates.

In one of the preferred embodiments, the method for preparing frozen fried eggs is based on:
- inserting the molds impregnated with oil with the cracked eggs into a convection oven at a temperature of between 238 and 246°C for between 136 and 144 seconds in order to fry the eggs, and then;
- inserting the molds with the fried eggs into a blast chiller at a temperature of between -20 and -16°C for between 18 and 22 minutes in order to freeze the eggs; and finally bagging them.

Preferably, the method for preparing frozen fried eggs is based on:
- inserting the molds impregnated with oil with the cracked eggs into a convection oven at a temperature of 242°C for 140 seconds in order to fry the eggs, and then;
- inserting the molds with the fried eggs into a blast chiller at a temperature of -22°C for 20 minutes in order to freeze the eggs; and finally bagging them.

To complement the description being made below, and to make it easier to better understand the characteristics of the invention, this descriptive report is accompanied by a set of drawings in which, for illustrative and not restrictive purposes, the following has been represented.

### BRIEF DESCRIPTION OF THE DRAWINGS

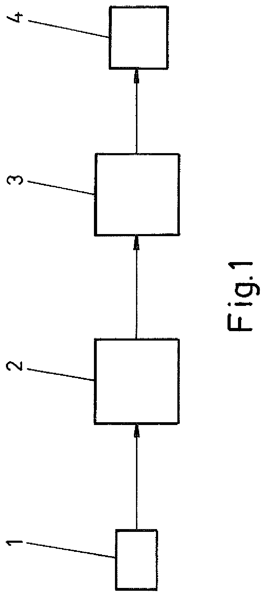

Figure 1 shows a view of a schematic diagram of the method for preparing frozen fried eggs.

### DESCRIPTION OF A PREFERRED EMBODIMENT

In light of the figures mentioned above and in accordance with the numbering adopted, it can be observed how, in order to proceed with the method that is the object of the invention, fresh eggs are cracked into corresponding molds 1 impregnated with oil and inserted into a convection oven 2 at a temperature of between 232 and 252°C for a period of 130 to 150 seconds in order to be fried, before being inserted into a blast chiller 3 at a temperature of between -23°C and -13°C for a period of 15 to 25 minutes in order to be frozen, before finally being individually bagged 4.

In one of the preferred embodiments of the method for preparing frozen fried eggs that is the object of the invention, fresh eggs are cracked into corresponding molds 1 impregnated with oil and inserted into a convection oven 2 at a temperature of between 238 and 246°C for a period of 136 to 144 seconds in order to be fried, before being inserted into a blast chiller 3 at a temperature of between -20°C and -16°C for a period of 18 to 22 minutes in order to be frozen, before finally being individually bagged 4.

In the preferred method for preparing frozen fried eggs that is the object of the invention, fresh eggs are cracked into corresponding molds 1 impregnated with oil and inserted into a convection oven 2 at a temperature of 242°C for a period od 140 seconds in order to be fried, before being inserted into a blast chiller 3 at a temperature of -22°C for 20 minutes in order to be frozen, before finally being individually bagged 4.

This method makes it possible to have fried eggs available without having to cook them, a procedure that obviously requires using a series of kitchen utensils that get dirty, and even worse, frying the eggs usually generates smoke that generate smells and get the kitchen dirty.

Additionally, it provides the advantage that, since not everyone has the same skill making fried eggs, everyone who does not have said skill will be able to consume fried eggs without any problems.

## Claims

1. A method for preparing frozen fried eggs, starting with fresh eggs, **characterised in that** it comprises:
- cracking the eggs into corresponding molds impregnated with oil;
- inserting the molds with the eggs into a convection oven at a temperature of between 232 and 252°C for a period of 130 to 150 seconds in order to fry the eggs;
- inserting the molds with the fried eggs into a blast chiller at a temperature of between -23 and -13°C for a period of 15 to 25 minutes in order to freeze the fried eggs; and
- individually bagging the molds with the frozen fried eggs.

2. A method for preparing frozen fried eggs, according to claim 1, **wherein:**
- the molds with the eggs are inserted into the convection oven at a temperature of between 238 and 246°C for a period of 136 to 144 seconds; and
- the molds with the fried eggs are inserted into the blast chiller at a temperature of between -20 and -16°C for a period of 18 to 22 minutes.

3. A method for preparing frozen fried eggs, according to claim 1, **wherein:**
- the molds with the eggs are inserted into the convection oven at the temperature of 242°C for the period of 140 seconds; and
- the molds with the fried eggs are inserted into the blast chiller at the temperature of -22°C for 20 minutes.

## Patentansprüche

1. Verfahren zum Herstellen gefrorener Spiegeleier, ausgehend von frischen Eiern, **dadurch gekennzeichnet, dass** es umfasst:
- Aufschlagen der Eier in entsprechende, mit Öl imprägnierte Formen;
- Einführen der Formen mit den Eiern in einen Konvektionsofen bei einer Temperatur zwischen 232 und 252°C über einen Zeitraum von 130 bis 150 Sekunden, um die Eier zu braten;
- Einführen der Formen mit den Spiegeleiern in einen Schockkühler bei einer Temperatur zwischen -23 und -13°C über einen Zeitraum von 15 bis 25 Minuten, um die Spiegeleier einzufrieren; und
- separates Verpacken der Formen mit den gefrorenen Spiegeleiern.

2. Verfahren zum Herstellen gefrorener Spiegeleier nach Anspruch 1, **wobei**
- die Formen mit den Eiern in den Konvektionsofen bei einer Temperatur zwischen 238 und 246°C über einen Zeitraum von 136 bis 144 Sekunden eingeführt werden; und
- die Formen mit den Spiegeleiern in den Schockkühler bei einer Temperatur zwischen - 20 und -16°C über einen Zeitraum von 18 bis 22 Minuten eingeführt werden.

3. Verfahren zum Herstellen gefrorener Spiegeleier nach Anspruch 1, **wobei**
- die Formen mit den Eiern in den Konvektionsofen bei der Temperatur von 242°C über den Zeitraum von 140 Sekunden eingeführt werden; und
- die Formen mit den Spiegeleiern in den Schockkühler bei der Temperatur von -22°C über 20 Minuten eingeführt werden.

## Revendications

1. Un procédé pour préparer des oeufs frits congelés, en partant d'oeufs frais, **caractérisé en ce qu'**il comprend :
- casser les oeufs dans des moules correspondants imprégnés d'huile ;
- introduire les moules avec les oeufs dans un four à convection à une température comprise entre 232 et 252°C pendant 130 à 150 secondes afin de faire frire les oeufs ;
- insérer les moules avec les oeufs frits dans une cellule de refroidissement à une température comprise entre -23 et -13°C pendant une période de 15 à 25 minutes afin de congeler les oeufs frits ; et
- ensacher individuellement des moules avec les oeufs frits congelés.

2. Un procédé de préparation d'oeufs frits congelés, selon la revendication 1, dans lequel :
- les moules contenant les oeufs sont introduits dans le four à convection à une température comprise entre 238 et 246°C pendant une période de temps allant de 136 à 144 secondes ; et
- les moules avec les oeufs frits sont insérés dans le refroidisseur à air à une température comprise entre -20 et -16°C pendant une période de 18 à 22 minutes.

3. Un procédé de préparation d'oeufs frits congelés, selon la revendication 1, dans lequel :
- les moules avec les oeufs sont insérés dans le four à convection à la température de 242°C pendant 140 secondes ; et
- les moules avec les oeufs frits sont insérés dans la cellule de refroidissement à la température de -22°C pendant 20 minutes.
